# EUROPÄISCHE PATENTANMELDUNG

(11) **EP 4 520 478 A1**
(43) Veröffentlichungstag der Anmeldung: **12.03.2025**
(21) Anmeldenummer: 23195745.7
(22) Anmeldetag: 06.09.2023
(51) Int. Cl.: B25B 5/12, B25B 5/16

(54) **VERFAHREN ZUM ERFASSEN DER AKTUELLEN PHASE EINES SPANNVERLAUFS SOWIE EIN ELEKTRISCHER KNIEHEBELSPANNER**

(71) Anmelder: Murrelektronik GmbH, 71570 Oppenweiler (DE)
(72) Erfinder: Bosch, Marco, 71570 Oppenweiler (DE); Prein, Olaf, 71570 Oppenweiler (DE)
(74) Vertreter: Prinz & Partner mbB

(57) **Zusammenfassung**

Ein Verfahren zum Erfassen der aktuellen Phase des Spannverlaufs eines elektrischen Kniehebelspanners (10), wobei der elektrische Kniehebelspanner (10) einen Elektromotor (14) und eine Auswerteeinheit (30) umfasst. Dabei umfasst das Verfahren wenigstens die folgenden Schritte:
- Messen des Drehwinkels des Elektromotors (14) und des aktuellen Motorstroms des Elektromotors (14);
- Auswerten des Drehwinkels und des Motorstroms mittels der Auswerteeinheit (30), um ein Auswerteergebnis zu erhalten; und
- Bestimmen der aktuellen Phase des Spannverlaufs des elektrischen Kniehebelspanners (10) basierend auf dem Auswertungsergebnis.

Außerdem wird ein elektrischer Kniehebelspanner (10) beschrieben.

## Beschreibung

Die Erfindung betrifft ein Verfahren zum Erfassen der aktuellen Phase des Spannverlaufs eines elektrischen Kniehebelspanners. Des Weiteren betrifft die Erfindung einen elektrischen Kniehebelspanner.

Um Werkstücke zur Bearbeitung zu fixieren, werden häufig Spanner eingesetzt, beispielsweise mechanische Spanner in Form von Schnellspannern oder Kniehebelspanner, die auf dem Kniehebelprinzip basieren.

Ausgehend von den mechanischen Spannern wurden pneumatisch angetriebene Spanner entwickelt, wodurch sich eine Automatisierung bei der Bearbeitung von Werkstücken ermöglichte. Aufgrund der relativ hohen Leistungsverluste während des Betriebs der pneumatischen Spanner wurden diese durch elektrisch angetriebene Spanner ersetzt, um die Effizienz zu erhöhen.

Unter anderem werden elektrisch angetriebene Kniehebelspanner verwendet, also Spanner, die auf dem Kniehebelprinzip basieren und elektrisch angetrieben sind. Dabei wird ein Kniehebel durch einen elektrischen Antrieb auf Basis einer Linearbetätigung bewegt. Somit wird bei elektrischen Kniehebelspannern die Spannkraft über eine Hebelbewegung erzeugt.

Üblicherweise sind bei elektrischen Kniehebelspannern zusätzliche Mechanismen wie Sensoren vorgesehen, um die Position des Kniehebels zu erfassen. Auch kann die Position des Kniehebels über eine Magnetspule und einen dazugehörigen Eisenkern bestimmt werden, was entsprechend als Sensor angesehen werden kann.

Es ist eine Aufgabe der Erfindung, einen in der Produktion günstigen elektrischen Kniehebelspanner bereitzustellen, mit dem der Spannprozess überwacht werden kann.

Die Aufgabe wird erfindungsgemäß gelöst durch ein Verfahren zum Erfassen der aktuellen Phase des Spannverlaufs eines elektrischen Kniehebelspanners. Der elektrische Kniehebelspanner umfasst einen Elektromotor und eine Auswerteeinheit. Dabei weist das Verfahren wenigstens die folgenden Schritte auf:
- Ermitteln des Drehwinkels des Elektromotors und des aktuellen Motorstroms des Elektromotors;
- Auswerten des Drehwinkels und des Motorstroms mittels der Auswerteeinheit, um ein Auswerteergebnis zu erhalten; und
- Bestimmen der aktuellen Phase des Spannverlaufs des elektrischen Kniehebelspanners basierend auf dem Auswertungsergebnis.

Der Grundgedanke der Erfindung ist es, die aktuelle Phase des Spannverlaufs eines elektrischen Kniehebelspanners (ausschließlich) anhand des Drehwinkels des Elektromotors und des Motorstroms zu bestimmen. Dadurch kann grundsätzlich auf Positionssensoren verzichtet werden, was den benötigten Bauraum reduziert und die Produktionskosten verringert. Des Weiteren müssen weniger Sensorergebnisse erfasst und ausgewertet werden, wodurch das Auswertungsverfahren vereinfacht wird.

Der Drehwinkel des Elektromotors kann durch einen Drehwinkelsensor ermittelt werden, insbesondere gemessen werden, beispielsweise durch einen Inkrementalgeber, ein Potenziometer oder einen Resolver. Alternativ kann als Elektromotor auch ein Servomotor oder ein Schrittmotor verwendet werden, sodass eine bestimmte Winkelbewegung vorgegeben ist, basierend auf der der Drehwinkel ermittelt werden kann. Insofern kann unter dem Ermitteln des Drehwinkels ein (aktives) Messen des Drehwinkels oder eine Vorgabe bzw. ein Erzwingen einer Bewegung verstanden werden, die mit einem vorgegebenen Drehwinkel einhergeht, sodass der Drehwinkel aus der Vorgabe berechnet werden kann.

Ferner ist so sichergestellt, dass etwaige Fertigungstoleranzen keinen Einfluss auf die Positionserfassung beim Kniehebelspanner haben, was bei mehreren, separat angeordneten Sensoren der Fall sein kann. Somit ist die Toleranz der Sensoren bei der Positionserfassung irrelevant.

Bei Kniehebelspannern ist es aufgrund des Wirkprinzips besonders schwierig, die Position bzw. die Phase des Spannverlaufs zu erfassen, wie nachfolgend dargelegt wird.

Gemäß dem Kniehebelprinzip ist ein Spannarm des Kniehebelspanners in einer geöffneten Stellung weit vom Werkstück entfernt. Typischerweise wird das Werkstück in dieser Stellung entnommen oder zur Bearbeitung eingesetzt.

Über einen Kniehebel des Kniehebelspanners, der beispielsweise zwei Hebelelemente umfasst, kann der Kniehebelspanner in eine Haltestellung überführt werden, in der das Werkstück gehalten ist, beispielsweise mittels des Spannarms.

Hierzu wird der Kniehebel zunächst bis zu seinem Hebeltotpunkt bewegt, in dem der Kniehebelspanner gespannt ist. Die Kraft, die auf das Werkstück wirkt, welche auch als Spannkraft bezeichnet wird, hängt hierbei im Wesentlichen von der Kraft ab, die am Kniehebel aufgebracht wird. Die am Kniehebel aufgebrachte Kraft kann auch als Betätigungskraft bezeichnet werden.

Anschließend kann der Kniehebel über den Hebeltotpunkt hinaus weiter in Richtung der Haltestellung bewegt werden, wobei der Kniehebel überstreckt wird, bis der Kniehebel einen Anschlag erreicht. Diese Bewegung über den Hebeltotpunkt hinaus muss initiiert werden, wobei der Kniehebel dann automatisch in Richtung des Anschlags schnappt. Dies ist durch die Geometrie des Kniehebels bedingt.

Die auf das Werkstück wirkende Spannkraft wird unter anderem von der Geometrie des eingespannten Werkstücks definiert. Die maximal mögliche Spannkraft hängt auch von der Geometrie bzw. dem Aufbau des Kniehebelspanners ab. Die Spannkraft ist also die Kraft, die durch den Kniehebelspanner beim Spannen auf das Werkstück ausgeübt wird. Dagegen definiert die Haltekraft die maximale Kraft, die auf den Kniehebelspanner ausgeübt werden kann, ohne dass der Kniehebelspanner beschädigt wird. Die Spannkraft, die auf das Werkstück aufgewendet werden kann, ist somit zwangsläufig geringer wie die Haltekraft des Spanners. Zudem wirken die Spannkraft und die Haltekraft beim Öffnen des Kniehebelspanners in entgegengesetzte Richtungen.

In der über den Hebeltotpunkt hinaus bewegten Stellung, also der Haltestellung, ist der Kniehebelspanner verriegelt. Dies bedeutet, dass sich der Kniehebelspanner am Spannarm nicht öffnen lässt, da sich dies zu einer Bewegung des Kniehebels in Richtung des Anschlags auswirken würde. Diese Verriegelung wird daher auch als Übertotpunktverriegelung bezeichnet. Mit anderen Worten kann beim Überstrecken des Kniehebels über den Totpunkt ein Verriegelungseffekt erreicht werden, da ein mechanischer Anschlag vorhanden ist. Auch wenn die Betätigungskraft abfällt, bleibt die Spannkraft erhalten und das verspannte Werkstück kann sich nicht selbsttätig lösen. Ein gewaltsames Öffnen über den Spannarm des Kniehebelspanners in der Haltestellung führt folglich zu einer Beschädigung oder Zerstörung des Kniehebelspanners.

Basierend auf der Auswertung des erfassten Motorstroms des Elektromotors und des ermittelten Drehwinkels des Elektromotors kann also unter anderem festgestellt werden, in welcher der oben genannten Phasen sich der elektrische Kniehebelspanner befindet. Mithilfe des erfassten Motorstroms kann wenigstens ein Referenzpunkt ermittelt werden, wovon ausgehend dann aufgrund des ermittelten Drehwinkels festgestellt werden kann, in welcher Stellung sich der Kniehebelspanner befindet. Bei dem Referenzpunkt kann es sich beispielsweise um die komplett geöffnete Stellung des Kniehebelspanners oder die komplett geschlossene Stellung des Kniehebelspanners handeln. Diese Stellungen lassen sich aufgrund des vorliegenden Anschlags und dem damit einhergehenden erhöhten Motorstrom über den ermittelten Motorstrom erfassen.

Über den Referenzpunkt und den ermittelten Drehwinkel des Elektromotors kann also festgestellt werden, in welcher der oben genannten Phasen sich der elektrische Kniehebelspanner befindet. Anders als im Stand der Technik ist es somit nicht notwendig, einen oder mehrere Positionssensoren zu verwenden, um die aktuelle Phase des Spannverlaufs und/oder die Position des Spannarms zu bestimmen. Stattdessen ist vorgesehen, einen Sensor, der den Motorstrom erfasst, sowie (optional) einen Sensor, der den Drehwinkel erfasst, zu verwenden, wobei der Sensor für den Motorstrom bereits in dem Elektromotor integriert sein kann. Handelt es sich bei dem Elektromotor um einen Servo- oder Schrittmotor, so kann auch auf einen Drehwinkelsensor verzichtet werden, wie bereits erläutert. Die Anzahl der verwendeten Sensoren und somit auch der Herstellungsaufwand werden dadurch deutlich reduziert. Gleichzeitig kann die Genauigkeit erhöht werden.

Insbesondere kann durch das Verfahren auch die aktuelle Position eines Spannarms des Kniehebelspanners basierend auf dem Auswertungsergebnis bestimmt werden. Somit werden auch für die Positionsbestimmung keine weiteren Sensoren benötigt, wodurch der benötigte Bauraum so klein wie möglich gehalten werden kann. Auf die Position des Spannarms kann unter anderem geschlossen werden, wenn die Geometrie des Kniehebelspanners bekannt ist. Die Position des Spannarms wird ausschließlich über den Drehwinkel des Elektromotors und den ermittelten Motorstrom bestimmt.

Sofern eine geöffnete Position und/oder eine geschlossene Position des Spannarms erfasst werden soll, reicht es unter anderem aus, ausschließlich den erfassten Motorstrom auszuwerten.

Gemäß einem Aspekt der Erfindung wird der Motorstrom mit wenigstens einer in der Auswerteeinheit gespeicherten Referenz verglichen, um ein Vergleichsergebnis zu erhalten, das dem Auswertungsergebnis entspricht. Anders ausgedrückt wird die Phase des Spannverlaufs basierend auf dem erfassten Motorstrom und dem ermittelten Drehwinkel des Elektromotors ermittelt, indem diese Werte mit einer in der Auswerteeinheit hinterlegten Referenz verglichen werden. Dadurch wird schon beim Bestimmen der Phase und/oder der Position festgestellt, ob es zu Abweichungen im Vergleich zu der Referenz kommt, das heißt im Vergleich zu dem erwarteten Ergebnis.

Bevorzugt weist die Referenz einen Referenzverlauf auf, der mehrere aufeinanderfolgende Referenzpunkte hat. Der Referenzverlauf stellt eine zeitliche Abfolge von Referenzpunkten dar, also das zeitliche Verhalten als Referenz. Insbesondere ist der Referenzverlauf ein theoretisch ermittelter Referenzverlauf oder ein zuvor gemessener Referenzverlauf.

Ein theoretischer Referenzverlauf kann von dem Hersteller bereitgestellt oder simuliert werden. Hierbei können auch weitere Umgebungsparameter wie Temperatur berücksichtigt werden, um den Referenzverlauf möglichst genau zu hinterlegen. Alternativ dazu können mehrere Referenzpunkte gemessen werden, basierend auf denen die Auswerteeinheit einen Referenzverlauf ermittelt, bspw. durch Interpolation und/oder Extrapolation.

Eine weitere Möglichkeit besteht darin, einen Referenzverlauf zu messen, also eine Messreihe an Referenzdaten aufzunehmen, die den Referenzverlauf darstellen. Dabei kann es sich bei dem Referenzverlauf um einen Kalibrierungsverlauf handeln, der einmalig vorgenommen wurde oder in vorbestimmten Zeitabständen wiederholt wird, beispielsweise nach jeder Inbetriebnahme des elektrischen Kniehebelspanners, sodass mögliche Abnutzungserscheinungen in der Referenz berücksichtigt werden können.

Durch eine solche Referenzfahrt, mit der der Referenzverlauf erhalten wird, ist es unter anderem möglich, fertigungsbedingte Toleranzen auszugleichen.

Gemäß einer Variante weist die Referenz wenigstens einen Referenzpunkt auf, insbesondere wobei der wenigstens eine Referenzpunkt der geöffneten Position und/oder der geschlossenen Position und/oder des Hebeltotpunktes entspricht. Auch kann der Referenzpunkt ein Schwellenwert sein, also eine Grenze für den Motorstrom. Sofern der Referenzpunkt erreicht oder überschritten wird, kann darauf geschlossen werden, dass der Kniehebelspanner seine geöffnete Stellung, seinen Totpunkt bzw. seine geschlossene Stellung erreicht hat.

Insbesondere wird über den Drehwinkel und den Referenzpunkt die Position des Spannarms bestimmt. Es kann zumindest ein Referenzpunkt in der Auswerteeinheit hinterlegt sein, ausgehend von dem und dem gemessenen Drehwinkel die Position des Spannarms ermittelt werden kann. Mit anderen Worten kann die Position des Spannarms rechnerisch vom Referenzpunkt und dem gemessenen Drehwinkel bestimmt werden. Ist die Position des Spannarms bekannt, so kann auch von dieser auf die Phase des Spannverlaufs geschlossen werden.

Es kann vorgesehen sein, dass die Phasen des Spannverlaufs, eine Schließfahrt, ein Spannen, ein Erreichen des Totpunkts, eine Verriegelung, ein Halten, ein Entriegeln und ein Entspannen umfassen. Dabei weist jede der Phasen eine bestimmte Position und/oder einen bestimmten Motorstrom auf, sodass es möglich ist, von dem Drehwinkel des Elektromotors und des Motorstroms auf die Phase bzw. die Position des Spannarms zu schließen.

Diese unterschiedlichen Phasen und Positionen haben charakteristische Motorströme und/oder Drehwinkel ausgehend von Referenzpositionen, sodass diese entsprechend bestimmt werden können, wenn der gemessene Motorstrom und/oder dem gemessenen Drehwinkel ausgewertet werden bzw. wird.

Während der Schließfahrt wird der Spannarm bis zum Kontakt mit einem Werkstück gefahren, sodass während der Schließfahrt nur eine geringe Kraft aufgewandt werden muss. Insbesondere muss die Kraft nur hoch genug sein, um eine systeminterne Reibung des Kniehebelspanners zu überwinden und die Masse des Spannarms zu beschleunigen. Dementsprechend ist der Motorstrom während der Schließfahrt gering.

Dagegen erhöht sich der Motorstrom, wenn die Spannphase anfängt und der Spannarm mit dem Werkstück in Berührung kommt, da eine zusätzliche Kraft aufgewandt werden muss, um das Werkstück niederzudrücken. Anhand des Drehwinkels des Elektromotors und eines vorherbestimmten Referenzwerts lässt sich auch der zurückgelegte Weg berechnen, bis der Spannvorgang anfängt, das heißt, bis der Spannarm mit dem Werkstück in Berührung kommt.

Der Totpunkt ist ein geometrischer Punkt des Kniehebelspanners, sodass sich der Totpunkt anhand des Drehwinkels ermitteln lässt. Erreicht der Spannarm den Totpunkt, so beginnt sich die Spannkraft aufzubauen. Die tatsächlich aufgebrachte Kraft kann über den Motorstrom ermittelt werden.

Wird der Spannarm nach Erreichen des Totpunkts weiter in Richtung Werkstück bewegt, also über den Totpunkt hinaus, so kommt es zur Verriegelung, nämlich der sogenannten Übertotpunktverriegelung. Dabei wird der Spannarm über den Totpunkt hinaus bis zu einem Anschlag bewegt. Der Kniehebelspanner schnappt dann aufgrund seiner Geometrie über, insbesondere bis zum Anschlag. Auch dieser Punkt lässt sich über den Motorstrom ermitteln. Insbesondere fällt die aufzuwendende Kraft schlagartig ab bzw. kehrt sich sogar um.

Während der Haltephase kommt es zu keiner Positionsveränderung und auch der Motorstrom bleibt konstant bei einem Nullwert, da keine Kraft (mehr) aufgewendet werden muss. Stattdessen wird die Spannkraft durch den Aufbau des Kniehebelspanners aufgebracht.

Beim Entriegeln wird der Kniehebel angefahren, um den Spannarm langsam in Richtung Totpunkt zurückzubewegen, sodass der Spannarm nicht länger gegen das Werkstück drückt. Die zum Lösen des Spannarms notwendige Kraft, die (größtenteils) durch den Motor aufgebracht wird, liegt in der Größenordnung der Spannkraft. Neben der vom Motor aufgebrachten Kraft sind zudem der Spannkraft entgegenwirkende Federkräfte zu berücksichtigen, welche vom Werkstück und/oder vom Spannarm ausgehen.

Beim Entspannen des Kniehebelspanners wird weiterhin eine der Spannkraft entgegenwirkende Kraft aufgebracht, bis nur noch die Kraft notwendig ist, die benötigt wird, systeminterne Kräfte, also unter anderem Reibung, des Kniehebelspanners zu überwinden und den Spannarm zu bewegen. Somit ist der ermittelte Motorstrom sehr gering.

Gemäß einer Variante ist vorgesehen, dass durch die Auswertung des Motorstroms auf Fehler und Verschleiß des elektrischen Kniehebelspanners sowie auf Anwendungsfehler geschlossen wird. Durch die Auswertung kommt es zu einem kontinuierlichen Vergleich des gemessenen Motorstroms mit der Referenz, insbesondere dem Referenzverlauf, sodass Abweichungen schnell und unkompliziert erfasst werden und im Falle von Störungen diese schnell behoben werden können.

Zu Anwendungsfehlern zählen beispielsweise ein falsches Positionieren des Werkstücks sowie das Verwenden eines falschen Werkstücks, von keinem Werkstück oder mehrerer Werkstücke.

Insbesondere lassen sich anhand der Auswertung des Motorstroms, beispielsweise des Vergleichs des Motorstroms mit dem Referenzverlauf, auch Fehler feststellen, die in einer Phase zwischen zwei charakteristischen Punkten auftreten.

Beispielsweise kann über den Motorstrom bestimmt werden, ob ein Werkstück überhaupt vorhanden ist. Ist kein Werkstück vorhanden, so ist die aufgebrachte Spannkraft bzw. der resultierende Motorstrom deutlich unter einem erwarteten Referenzwert. Auch wenn ein Werkstück falsch positioniert ist, weicht der Motorstrom bzw. die Spannkraft von dem erwarteten Referenzwert ab. Des Weiteren kann erkannt werden, ob zwei oder mehr Werkstücke vorhanden sind. Dabei liegt die Spannkraft und folglich der Motorstrom deutlich über dem erwarteten Referenzwert bzw. über der maximalen Spannkraft. Außerdem kann der Motorstrom in diesem Fall auch schon vor Erreichen des Totpunkts über dem maximal erwarteten Motorstrom liegen.

Grundsätzlich kann von dem erfassten Motorstrom auf die aufgebrachte Spannkraft geschlossen werden. Dementsprechend ist kein zusätzlicher Sensor notwendig, um die aufgebrachte Spannkraft zu bestimmen. Hierbei kann erneut die Geometrie des Kniehebelspanners berücksichtigt werden.

Gemäß einer Ausführungsform umfasst die Auswerteeinheit einen Prozessor, auf dem eine trainierte künstliche Intelligenz ausgeführt wird, insbesondere ein Algorithmus für maschinelles Lernen, die bei der Auswertung verwendet wird. Die künstliche Intelligenz ist dabei in der Lage, nicht nur spezifische Fehler anhand starker Abweichungen bzw. extremer Änderungen im ermittelten Motorstrom zu bestimmen, sondern auch eine schleichende Veränderung im Motorstrom zu registrieren. Eine solche schleichende Veränderung deutet beispielsweise auf einen Verschleiß des Kniehebelspanners hin. Durch die künstliche Intelligenz lassen sich also Anomalien im Werkstück sowie ein Verschleiß des Kniehebelspanners bestimmen.

Grundsätzlich lassen sich die schleichenden Veränderungen im Motorstrom auch ohne künstliche Intelligenz feststellen. Es kann hierzu ein Trend ermittelt werden, beispielsweise für Vergleichspunkte während des Spannverlaufs, die den Referenzpunkten entsprechen können. Sollte sich ein Trend der Vergleichspunkte in eine Richtung abzeichnen, so kann dies als Indiz für einen Verschließ gewertet werden.

Die künstliche Intelligenz kann zum vereinfachten Detektieren vorgesehen werden, da eine schleichende Veränderung nur mit einem größeren Aufwand, insbesondere mit einem vergleichsweise großen Rechenaufwand, ermittelt werden kann, da viele weitere Effekte sich ebenfalls im Motorstrom widerspiegeln, beispielsweise die Temperatur.

Als Eingangsparameter der künstlichen Intelligenz kann der Motorstrom und/oder der Drehwinkel dienen, wohingegen als Ausgangsparameter die Position des Spannarms und/oder die Phase des Spannverlaufs des elektrischen Kniehebelspanners vorgesehen sein können.

Die künstliche Intelligenz kann mittels eines Trainingsverfahrens trainiert worden sein, in dem ein Trainingsdatensatz verwendet wird, der Eingangsparameter und zu erwartende Ausgangsparameter enthält, also den Motorstrom und/oder den Drehwinkel als Eingangsparameter sowie eine zugeordnete Position des Spannarms und/oder Phase des Spannverlaufs als Ausgangsparameter. Während des Trainings wird die künstliche Intelligenz mit den Eingangsparametern des Trainingsdatensatzes gespeist, wobei Ausgangsparameter von der zu trainierenden künstlichen Intelligenz ausgegeben werden. Diese werden mit den Ausgangsparametern des Trainingsdatensatzes verglichen, um eine Abweichung zu bestimmen. Sofern die Abweichung oberhalb eines Schwellenwerts liegt, wird die Abweichung bspw. in die zu trainierende künstliche Intelligenz zurückgespeist, um Gewichtungsparameter der zu trainierenden künstlichen Intelligenz anzupassen. Diese Schritte werden wiederholt, bis die festgestellte Abweichung unterhalb des Schwellenwerts liegt. Sobald dies erreicht ist, ist die künstliche Intelligenz ausreichend trainiert, um für die Auswertung verwendet werden zu können.

Die künstliche Intelligenz kann einem Prozessor des Kniehebelspanners ausgeführt werden, also lokal. Alternativ kann der Prozessor Teil einer Serverstruktur sein, sodass es sich bei der künstlichen Intelligenz um ein cloudbasiertes Softwaremodul handeln kann.

Bevorzugt wird wenigstens eine Referenzfahrt durchgeführt, um eine Referenz zu bestimmen. Dabei umfasst die Referenzfahrt wenigstens die folgenden Schritte:
- Bewegen des elektrischen Kniehebelspanners in dessen Schließrichtung, indem der Elektromotor um einen vorbestimmten Drehwinkel in Schließrichtung angetrieben wird;
- Erfassen des Motorstroms; und
- Speichern einer Referenz basierend auf dem erfassten Motorstrom.

Neben dem oder alternativ zum tatsächlich erfassten Motorstrom können auch aus dem erfassten Motorstrom abgeleitete Werte genutzt werden, beispielsweise Extremwerte des Motorstroms, ein arithmetisches Mittel des Motorstroms aus mehreren Referenzfahrten, eine errechnete Kodifizierung des Motorstroms. Hieraus kann entsprechend die Referenz bestimmt werden.

Dabei kann das Verfahren voraussetzen, dass der Drehwinkel als ein Absolutwert vorliegt. Die Referenzfahrt kann als Kalibrierungsfahrt fungieren, und vor jeder Inbetriebnahme des Kniehebelspanners durchgeführt werden. Somit können fertigungsbedingte Toleranzen durch die Referenzfahrt weitestgehend ausgeglichen werden.

Alternativ zu der Referenzfahrt kann selbstverständlich auch eine theoretisch ermittelte Referenz verwendet werden. In jedem Fall kann auf einen Referenzschalter verzichtet werden, um den Aufbau des elektrischen Kniehebelspanners zu vereinfachen. Dabei kann das Ende der Bewegung die komplett geschlossene oder die komplett geöffnete Position, insbesondere die Nullpunktposition, des Kniehebelspanners sein.

Gemäß einem Aspekt wird die geöffnete Stellung angefahren, wenn beim Erfassen des Motorstroms festgestellt wird, dass der Motorstrom während der Referenzfahrt beim Verfahren in Schließrichtung unterhalb eines ersten Referenzwerts bleibt, wobei die gespeicherte Referenz dann der Offenstellung als Referenzpunkt entspricht. Der erste Referenzwert entspricht einem Referenzwert für den Anschlag. Insofern wird festgestellt, ob der Spannarm auf Anschlag in Richtung Schließstellung gefahren wurde oder bereits davor mit einem Werkstück in Kontakt kommt, wenn der Elektromotor um den vorbestimmten Drehwinkel in die Schließrichtung betrieben wird. Dies ist insbesondere deshalb vorteilhaft, da bei der Inbetriebnahme des elektrischen Kniehebelspanners nicht zwangsläufig sicher ist, ob sich ein Werkstück auf dem Werkstückträger befindet.

Der elektrische Kniehebelspanner kann bis zum maximalen Totpunkt in die geöffnete Stellung und anschließend in die geschlossene Position gefahren werden, wobei erneut der Motorstrom erfasst wird, wenn der Motorstrom beim Erfassen des Motorstroms einen ersten Referenzwert überschreitet. Sofern der Motorstrom den ersten Referenzwert überschreitet, hat der Spannarm ein Werkstück kontaktiert oder ist auf Anschlag in Schließrichtung verfahren worden. Durch das Anfahren des Totpunkts in Offenstellung kann ein definierter Zustand erreicht werden.

Es kann vorgesehen sein, dass, wenn der Motorstrom einen zweiten Referenzwert beim erneuten Erfassen des Motorstroms überschreitet, festgestellt wird, dass der elektrische Kniehebelspanner sich in der geschlossenen Position befindet und ein Werkstück vorhanden ist, und/oder dass, wenn der Motorstrom beim erneuten Erfassen des Motorstroms unterhalb des zweiten Referenzwertes liegt, festgestellt wird, dass der elektrische Kniehebelspanner sich in der geschlossenen Position befindet und kein Werkstück vorhanden ist. Somit ist das Resultat entweder der elektrische Kniehebelspanner ist geschlossen und ein Werkstück ist vorhanden oder der elektrische Kniehebelspanner ist geschlossen und kein Werkstück ist vorhanden. Ist ein Werkstück vorhanden und der elektrische Kniehebelspanner ist geschlossen, kann es vorteilhaft sein, beim Öffnen des Kniehebelspanners die komplett geöffnete Stellung ebenfalls anzufahren. Der zweite Referenzwert entspricht also einem Referenzwert für ein eingelegtes Werkstück.

Ferner wird die Aufgabe erfindungsgemäß gelöst durch einen elektrischen Kniehebelspanner mit einem Elektromotor, einem Spannarm, wenigstens einem Sensor und einer Steuer- und Auswerteeinheit, wobei die Steuer- und Auswerteeinheit eingerichtet ist, das vorhergehend beschriebene Verfahren auszuführen. Hinsichtlich der Vorteile und Eigenschaften wird auf die vorherigen Ausführungen bzgl. des Verfahrens verwiesen, die ebenso für den elektrischen Kniehebelspanner gelten. Bei dem wenigstens einen Sensor kann es sich um einen Sensor handeln, der den Motorstrom des Elektromotors erfasst. Ergänzend kann noch ein Drehwinkelsensor vorgesehen sein, um den Drehwinkel zu messen.

Weitere Merkmale und Vorteile der Erfindung ergeben sich aus der nachfolgenden Beschreibung sowie aus den Zeichnungen, auf die Bezug genommen wird. In den Zeichnungen zeigen:
- Figur 1 eine schematische Darstellung eines erfindungsgemäßen elektrischen Kniehebelspanners;
- Figur 2 ein Flussdiagramm der Referenzfahrt;
- Figur 3 eine schematische Darstellung des elektrischen Kniehebelspanners aus Figur 1 in der Nullposition;
- Figur 4 eine schematische Darstellung des elektrischen Kniehebelspanners aus Figur 1 am Totpunkt; und
- Figur 5 eine schematische Darstellung des elektrischen Kniehebelspanners aus Figur 1 in einer verriegelten Position.

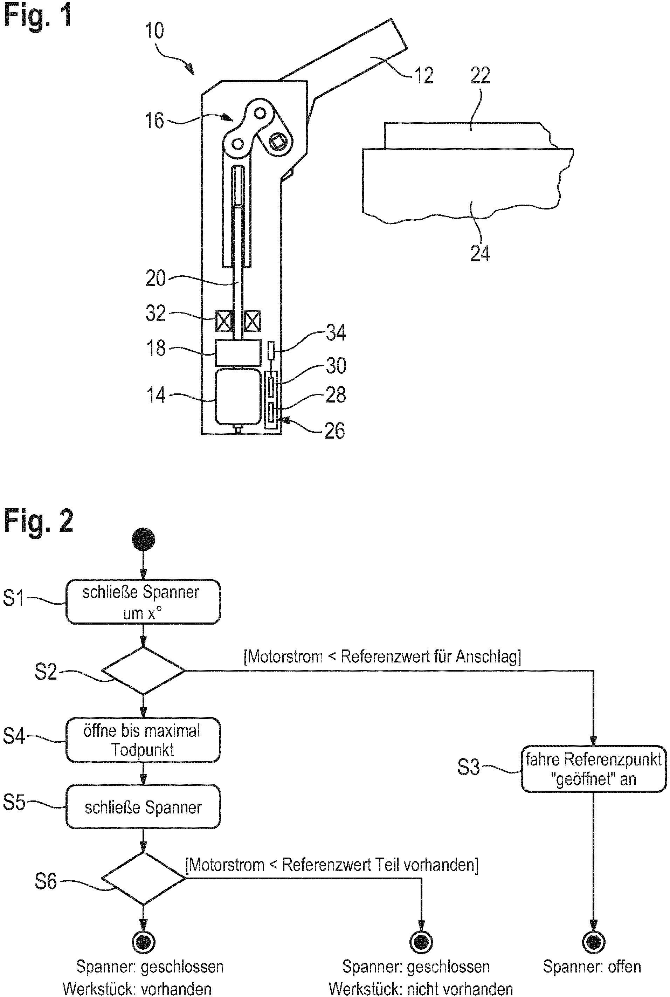

Figur 1 zeigt einen erfindungsgemäßen elektrischen Kniehebelspanner 10 in einer halb geschlossenen Position.

Der elektrische Kniehebelspanner 10 umfasst einen Spannarm 12, einen Elektromotor 14 und einen vom Elektromotor 14 angetriebenen Kniehebel 16, der mit dem Spannarm 12 zusammenwirkt.

Dabei ist der Elektromotor 14, vorzugsweise über ein Getriebe 18, mit einer Spindel 20 verbunden, wobei die Spindel 20 die Bewegung des Elektromotors 14 auf den Kniehebel 16 überträgt. Hierdurch wird demnach eine Drehbewegung des Elektromotors 14 in eine Linearbewegung umgesetzt.

Der Kniehebel 16 ist dabei mit dem Spannarm 12 verbunden und kann diesen von einem Werkstück 22, welches auf einer Vorrichtung bzw. einem Werkstückträger 24 platziert ist, wegbewegen oder zu dem Werkstück 22 hinbewegen.

Der elektrische Kniehebelspanner 10 umfasst außerdem eine Steuer- und Auswerteeinheit 26. Die Steuer- und Auswerteeinheit 26 umfasst demnach eine Steuereinheit 28 als auch eine Auswerteeinheit 30, welche in getrennten Modulen ausgebildet bzw. auf getrennten Prozessoren ausgeführt sein können oder in einem gemeinsamen Modul bzw. auf einem gemeinsamen Prozessor.

Die Steuer- und Auswerteeinheit 26, insbesondere die Auswerteeinheit 30, kann eingerichtet sein, den Motorstrom des Elektromotors 14 zu erfassen.

Des Weiteren umfasst der elektrische Kniehebelspanner 10 in der in Figur 1 gezeigten Ausführungsform wenigstens einen (optionalen) Sensor 32 zum Erfassen eines Drehwinkels des Elektromotors 14.

Der Sensor 32, der mit der Spindel 20 zusammenwirkt, kann ein Inkrementalgeber, ein Absolutwertgeber oder ein Resolver sein, die alle zum Bestimmen des Drehwinkels des Elektromotors 14 geeignet sind.

Alternativ zu dem Sensor 32 kann der Elektromotor 14 durch einen Schrittmotor oder einen bürstenlosen Gleichstrommotor, beispielsweise in Form eines Servomotors, realisiert werden, sodass eine Bewegung bzw. ein Winkel zwanghaft vorgegeben werden kann. Es wird dann kein weiterer Sensor benötigt, um den Drehwinkel zu erfassen.

Der Spannverlauf des elektrischen Kniehebelspanners 10 umfasst mehrere Phasen, bspw. eine Schließfahrt, ein Spannen, ein Erreichen des Totpunkts, eine Verriegelung, ein Halten, ein Entriegeln und ein Entspannen.

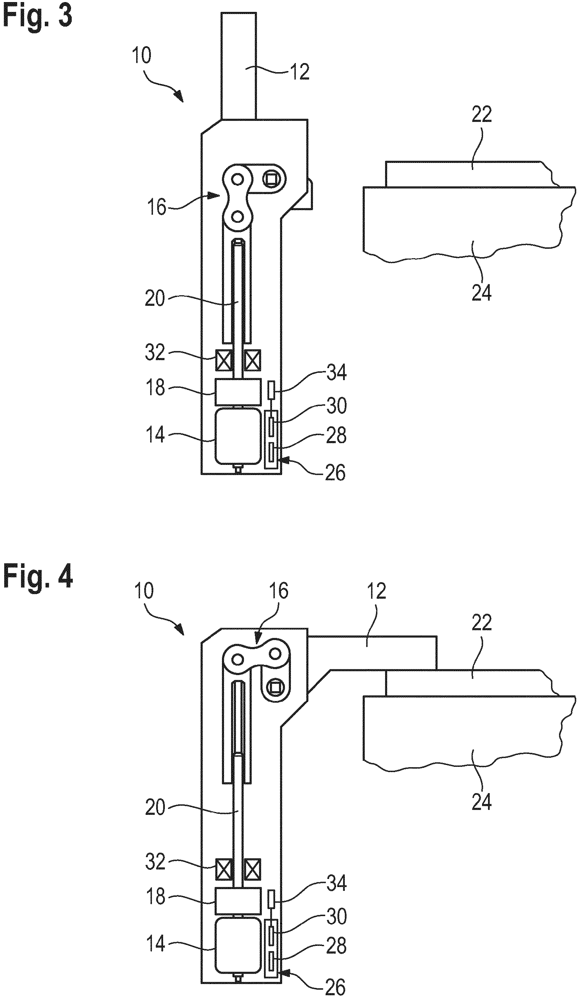

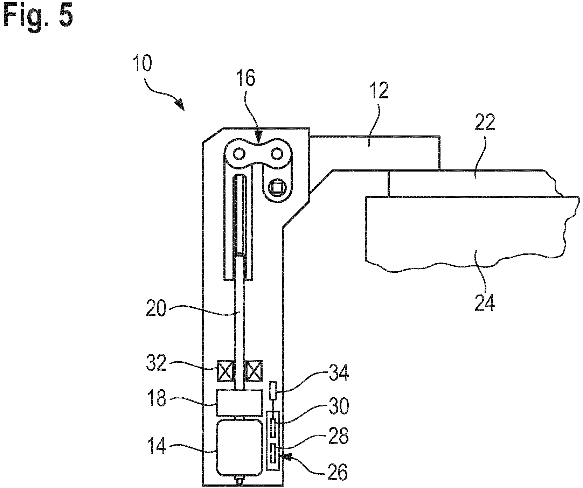

In der Figur 1 befindet sich der elektrische Kniehebelspanner 10 in einer halb geschlossenen Position, welche der Schließfahrt oder dem Entspannen entsprechen kann. Der Totpunkt des Kniehebelspanners 10 ist dagegen in Figur 4 gezeigt, während Figur 5 die komplett geschlossene Position, d.h. die Haltephase, des elektrischen Kniehebelspanners 10 zeigt. In Figur 3 ist der elektrische Kniehebelspanner 10 dagegen in seiner Nullposition gezeigt, d. h. in der komplett geöffneten Position.

Jede der Phasen des Spannverlaufs weist einen charakteristischen Drehwinkel und/oder Motorstrom des Elektromotors 14 auf. Somit kann basierend auf dem ermittelten Motorstrom und des ermittelten Drehwinkels auf die Phase des Spannverlaufs und die Position des Spannarms 12 bzw. des Kniehebels 16 geschlossen werden. Hierbei wird mittels des Motorstroms ein Referenzpunkt festgestellt, ausgehend von dem dann aufgrund des ermittelten Drehwinkels die Phase des Spannverlaufs und die Position des Spannarms 12 bzw. des Kniehebels 16 festgestellt werden kann.

Dazu kann von der Auswerteeinheit 30 ein Auswertungsergebnis ermittelt und mit einer Referenz verglichen werden.

Von dem gemessenen Motorstrom kann außerdem auf die aufgebrachte Spannkraft des elektrischen Kniehebelspanners 10 geschlossen werden. Dabei ist die Spannkraft proportional zu dem ermittelten Motorstrom. Folglich entspricht ein Anstieg des Motorstroms einem Erhöhen der Spannkraft und ein Verringern des Motorstroms entspricht einer niedrigeren Spannkraft.

Nachfolgend werden die einzelnen Phasen des Spannverlaufs erläutert, insbesondere deren Bezug zu dem Drehwinkel des Elektromotors 14 und dem Motorstrom, wobei davon ausgegangen wird, dass sich der elektrische Kniehebelspanner 10 zu Beginn in der geöffneten Position befindet. Anders ausgedrückt startet der Spannverlauf in der in Figur 3 gezeigten Nullpunkt-Position des elektrischen Kniehebelspanners 10, sodass ein Werkstück 22 auf dem Werkstückträger 24 platziert werden kann.

Bei einer Schließfahrt bewegt sich der Spannarm 12 aus der Nullpunkt-Position in Richtung des Werkstücks 22, was bspw. in Figur 1 gezeigt ist.

Bei der Schließfahrt ist der Spannarm 12 also noch nicht in Kontakt mit dem Werkstück 22, sodass lediglich eine Kraft aufgewandt werden muss, um die Reibung des Kniehebelspanners 10 zu überwinden und die Beschleunigung der Masse des Spannarms 12 zu gewährleisten. Dementsprechend wird ein geringer Motorstrom erfasst.

Sobald der Spannarm 12 mit dem Werkstück 22 in Berührung kommt, steigt die Spannkraft an. Dementsprechend wird auch eine Erhöhung des Motorstroms erfasst. Anhand des Drehwinkels kann der von dem Spannarm 12 zurückgelegte Weg von der Nullpunkt-Position bis zur Berührung des Werkstücks 22 ermittelt werden.

Wird die Spindel 20 weiter bzw. der Spannarm 12 weiter Richtung Werkstück 22 verfahren, so erreicht der elektrische Kniehebelspanner 10 seinen Totpunkt. Diese Position ist in Figur 4 gezeigt. Bei dem Totpunkt des elektrischen Kniehebelspanners 10 handelt es sich um eine geometrische Position, sodass diese besonders gut durch den Drehwinkel bestimmt werden kann. Basierend auf dem ermittelten Motorstrom kann dabei die aufgebrachte Spannkraft errechnet werden. Beim Einrichten des elektrischen Kniehebelspanners 10 kann an diesem Punkt ebenfalls die Spannkraft ermittelt werden, was es ermöglicht, den elektrischen Kniehebelspanner 10 optimal einzustellen.

Wird die Spindel 20 nach Erreichen des Totpunkts weiter angetrieben, so erreicht der elektrische Kniehebelspanner 10 seine Verriegelung. Letztendlich schnappt der Kniehebel 16 über, da die Spindel 20 über den Totpunkt des Kniehebels 16 hinaus angetrieben wird. Dabei erreicht der elektrische Kniehebelspanner 10 den Anschlag, der die Schnappbewegung des Spannarms 12 begrenzt, was in Figur 5 gezeigt ist. Auch dieser Punkt lässt sich besonders gut durch einen Drehwinkel ermitteln, während der Motorstrom Auskunft über die aufgebrachte Spannkraft gibt.

Während der Haltephase kommt es zu keiner Veränderung des Motorstroms oder des Drehwinkels, da der Spannarm 12 durch den Kniehebel 16 an den Anschlag gedrückt wird.

Beim Entriegeln steigt der Motorstrom bis zum Erreichen des Totpunktes an. Der Spannarm 12 wird also Richtung Totpunkt und anschließend in Richtung Nullpunkt-Position (zurück-)bewegt.

Nach dem Entriegeln erfolgt das Entspannen, wobei der Motorstrom wieder sinkt und die Spannkraft dementsprechend, bis das Werkstück 22 freigegeben ist, weiter abnimmt. Zwischen dem Punkt an dem das Werkstück 22 freigegeben wird und der Nullpunkt-Position muss lediglich Kraft aufgebracht werden, um die interne Reibung zu überwinden. Der benötigte Motorstrom ist dementsprechend gering.

Die in der Auswerteeinheit 30 hinterlegte Referenz weist bevorzugt einen Referenzverlauf auf, der mehrere aufeinander folgende Referenzpunkte hat, also einen zeitlichen Verlauf der Referenzpunkte. Dabei kann der Referenzverlauf theoretisch ermittelt werden oder ein zuvor gemessener Referenzverlauf sein.

Die Referenz sollte jedoch zumindest einen Referenzpunkt aufweisen, der der geöffneten und/oder der geschlossenen Position entspricht.

Das Bestimmen eines Referenzpunktes ist schematisch in dem Flussdiagramm in Figur 2 gezeigt, worauf nachfolgend Bezug genommen wird.

Eine solche Referenzfahrt wird bevorzugt nach jedem Einschalten des elektrischen Kniehebelspanners 10 durchgeführt, da zur Bestimmung der Position des elektrischen Kniehebelspanners 10 und der Phase des Spannverlaufs der Drehwinkel als ein Absolutwert gegeben sein sollte.

Die Spindel 20 ermöglicht jedoch Drehungen, die über 360 Grad hinausgehen, sodass ein Drehwinkel über mehrere Drehungen gemeint ist. Somit muss mindestens einmal ein Referenzpunkt bestimmt werden, beispielsweise über den Motorstrom. Insbesondere wenn der Drehwinkel im ausgeschalteten Zustand nicht gespeichert werden kann, muss eine Referenzfahrt nach jedem Einschalten des Kniehebelspanners 10 durchgeführt werden.

Zu Beginn der Referenzfahrt wird in einem ersten Schritt S1 der elektrische Kniehebelspanner 10 um einen vorbestimmten Drehwinkel von dem Elektromotor 14 in Richtung Schließrichtung angetrieben. Dabei wird der Motorstrom erfasst und in einem zweiten Schritt S2 mit einem ersten Referenzwert verglichen, der einem Anschlag entspricht.

Sollte der Motorstrom unterhalb des ersten Referenzwerts bleiben, so ist der Spannarm 12 weder mit einem Werkstück in Kontakt gekommen noch auf Anschlag gefahren worden.

Dementsprechend wird der elektrische Kniehebelspanner 10 in einem dritten Schritt S3 in seine Nullpunkt-Position, d. h. in seine komplett geöffnete Position, gefahren. Die Nullpunkt-Position ist in Figur 3 gezeigt, wobei in der Nullpunkt-Position der Spannarm 12, der Kniehebel 16 und die Spindel 20 koaxial angeordnet sind. Durch den ermittelten Motorstrom sowie einen entsprechenden Referenzwert kann erkannt werden, wann der Spannarm 12 die Nullpunkt-Position erreicht hat.

Ist im Schritt S2 der Motorstrom größer als der erste Referenzwert, so ist der Spannarm 12 entweder mit einem Werkstück 22 in Kontakt gekommen oder auf Anschlag gefahren worden. Dabei ist also nicht sicher, ob ein Werkstück 22 auf dem Werkstückträger 24 angeordnet ist.

Überschreitet der ermittelte Motorstrom also den ersten Referenzwert für den Anschlag im Schritt S2, so wird der elektrische Kniehebelspanner 10 in einem vierten Schritt S4 bis zu seinem Totpunkt geöffnet. Dadurch kann sichergestellt werden, dass der elektrische Kniehebelspanner 10 eine definierte Position hat.

Anschließend wird der elektrische Kniehebelspanner 10 in einem fünften Schritt S5 in seine Verriegelungsposition gefahren, welche in Figur 5 zu sehen ist. Dabei wird in einem weiteren Schritt S6 erneut der Motorstrom erfasst. Anhand des erfassten Motorstroms kann dann bestimmt werden, ob sich der elektrische Kniehebelspanner 10 in seiner Haltephase befindet oder nicht. Es wird also ermittelt, ob ein Werkstück 22 auf dem Werkstückträger 24 vorhanden ist und ob dieses gerade von dem elektrischen Kniehebelspanner 10 eingespannt ist.

Dafür wird der erfasste Motorstrom in dem Schritt S6 mit einem zweiten Referenzwert verglichen, um zu unterscheiden, ob ein Werkstück 22 gespannt wird oder ob der Kniehebelspanner 10 auf Anschlag gefahren wurde.

Überschreitet der erfasste Motorstrom den zweiten Referenzwert, so befindet sich der Kniehebelspanner 10 in der geschlossenen Position und ein Werkstück 22 ist vorhanden. Unterschreitet der Motorstrom dagegen den zweiten Referenzwert, so befindet sich der elektrische Kniehebelspanner 10 in der geschlossenen Position und kein Werkstück 22 ist vorhanden.

Wenn der Referenzpunkt bzw. der Referenzverlauf bestimmt worden ist, kann der elektrische Kniehebelspanner 10 zum Einspannen eines Werkstücks 22 auf dem Werkstückträger 24 verwendet werden.

Um die aktuelle Phase des Spannverlaufs zu bestimmen, werden der Drehwinkel des Elektromotors 14 sowie der Motorstrom erfasst. Diese werden von der Auswerteeinheit 30 mit der Referenz verglichen, d. h. mit dem Referenzwert oder dem Referenzverlauf, sodass die Auswerteeinheit 30 ein Vergleichsergebnis erhält, das dem Auswertungsergebnis entspricht.

Stellt die Auswerteeinheit 30 eine abrupte Änderung im Auswertungsergebnis fest oder weicht das Auswertungsergebnis stark von der Referenz bzw. dem Vergleichsergebnis ab, so deutet dies auf einen Fehler des elektrischen Kniehebelspanners 10 hin.

Beim Erreichen des Totpunkts kann außerdem festgestellt werden, dass kein Werkstück 22 zwischen dem Spannarm 12 und dem Werkstückträger 24 positioniert ist. Ist kein Werkstück 22 vorhanden, so ist der ermittelte Motorstrom deutlich unter dem erwarteten Referenzwert, da die aufzubringende Spannkraft niedriger ist, als wenn ein Werkstück 22 vorhanden ist.

Es kann auch ein falsch platziertes Werkstück 22 als Fehler detektiert werden. Bei einem falsch positionierten Werkstück 22 oder bei mehreren auf dem Werkstückträger 24 platzierten Werkstücken 22 wird ein Motorstrom, der größer als der erwarteten Referenzwert ist, detektiert. Insbesondere wird ein zu hoher Motorstrom bereits vor Erreichen des Totpunkts detektiert.

Neben solchen spezifischen Fehlern, kann anhand einer Veränderung des Motorstroms auch auf weitere Fehler, insbesondere auf einen Verschleiß, geschlossen werden. Während spezifische Fehler insbesondere durch einen abrupten Anstieg im Motorstrom gekennzeichnet sind, resultiert der Verschleiß des Kniehebelspanners 10 dagegen in einem schleichenden Anstieg des Motorstroms über eine längere Zeit hinweg. Diese Veränderung ist jedoch schwer zu erkennen und kann nur mit einem großen Rechenaufwand ermittelt werden, da weitere Effekte wie bspw. die Temperatur sich in Veränderung des Motorstroms wiederspiegeln.

Um solche Fehler und insbesondere Verschleiß, also eine schleichende Veränderung, zu detektieren, umfasst die Auswerteeinheit 30 einen Prozessor 34, auf dem eine (trainierte) künstliche Intelligenz ausgeführt wird. Bevorzugt handelt es sich dabei um einen Algorithmus für maschinelles Lernen, der zur Auswertung der Motorstromveränderung verwendet wird.

Alternativ kann die künstliche Intelligenz bzw. der Algorithmus für maschinelles Lernen auch auf einer Serverstruktur, bspw. als Teil einer Cloud, ausgeführt werden, auf die der Prozessor 34 bzw. die Auswerteeinheit 30 Zugriff hat.

### Bezugszeichen

- 10: elektrischer Kniehebelspanner
- 12: Spannarm
- 14: Elektromotor
- 16: Kniehebel
- 18: Getriebe
- 20: Spindel
- 22: Werkstück
- 24: Werkstückträger
- 26: Steuer- und Auswerteeinheit
- 28: Steuereinheit
- 30: Auswerteeinheit
- 32: Sensor
- 34: Prozessor

## Patentansprüche

1. Verfahren zum Erfassen der aktuellen Phase des Spannverlaufs eines elektrischen Kniehebelspanners (10), wobei der elektrische Kniehebelspanner (10) einen Elektromotor (14) und eine Auswerteeinheit (30) umfasst, und wobei wenigstens die folgenden Schritte durchgeführt werden:
- Messen des Drehwinkels des Elektromotors (14) und des aktuellen Motorstroms des Elektromotors (14);
- Auswerten des Drehwinkels und des Motorstroms mittels der Auswerteeinheit (30), um ein Auswertungsergebnis zu erhalten; und
- Bestimmen der aktuellen Phase des Spannverlaufs des elektrischen Kniehebelspanners (10) basierend auf dem Auswertungsergebnis.

2. Verfahren nach Anspruch 1, **dadurch gekennzeichnet, dass** die aktuelle Position eines Spannarms (12) des Kniehebelspanners (10) basierend auf dem Auswerteergebnis bestimmt wird.

3. Verfahren nach Anspruch 1 oder 2, **dadurch gekennzeichnet, dass** der Motorstrom mit wenigstens einer in der Auswerteeinheit (30) gespeicherten Referenz verglichen wird, um ein Vergleichsergebnis zu erhalten, das dem Auswertungsergebnis entspricht.

4. Verfahren nach Anspruch 3, **dadurch gekennzeichnet, dass** die Referenz einen Referenzverlauf aufweist, der mehrere aufeinanderfolgende Referenzpunkte hat, insbesondere ein theoretisch ermittelter Referenzverlauf oder ein zuvor gemessener Referenzverlauf.

5. Verfahren nach Anspruch 3 oder 4, **dadurch gekennzeichnet, dass** die Referenz wenigstens einen Referenzpunkt aufweist, insbesondere wobei der wenigstens eine Referenzpunkt der geöffneten Position und/oder der geschlossenen Position entspricht.

6. Verfahren nach einem der vorhergehenden Ansprüche, **dadurch gekennzeichnet, dass** die Phasen des Spannverlaufs eine Schließfahrt, ein Spannen, ein Erreichen des Totpunkts, eine Verriegelung, ein Halten, ein Entriegeln und ein Entspannen umfassen.

7. Verfahren nach einem der vorhergehenden Ansprüche, **dadurch gekennzeichnet, dass** durch die Auswertung des Motorstroms auf Fehler und Verschleiß des elektrischen Kniehebelspanners (10) geschlossen wird.

8. Verfahren nach einem der vorhergehenden Ansprüche, **dadurch gekennzeichnet, dass** erkannt wird, ob ein Werkstück (22) vorhanden ist.

9. Verfahren nach einem der vorhergehenden Ansprüche, **dadurch gekennzeichnet, dass** basierend auf dem Motorstrom auf die aufgebrachte Spannkraft geschlossen wird.

10. Verfahren nach einem der vorhergehenden Ansprüche, **dadurch gekennzeichnet, dass** die Auswerteeinheit (30) einen Prozessor (34) umfasst, auf dem eine trainierte Künstliche Intelligenz ausgeführt wird, insbesondere ein Algorithmus für maschinelles Lernen, die bei der Auswertung verwendet wird.

11. Verfahren nach einem der vorhergehenden Ansprüche, **dadurch gekennzeichnet, dass** wenigstens eine Referenzfahrt durchgeführt wird, um eine Referenz zu bestimmen, wobei die Referenzfahrt wenigstens die folgenden Schritte umfasst:
- Bewegen des elektrischen Kniehebelspanners (10) in dessen Schließrichtung, indem der Elektromotor (14) um einen vorbestimmten Drehwinkel in Schließrichtung angetrieben wird;
- Erfassen des Motorstroms; und
- Speichern einer Referenz basierend auf dem erfassten Motorstrom.

12. Verfahren nach Anspruch 11, **dadurch gekennzeichnet, dass** die geöffnete Stellung angefahren wird, wenn beim Erfassen des Motorstroms festgestellt wird, dass der Motorstrom während der Referenzfahrt beim Verfahren in Schließrichtung unterhalb eines ersten Referenzwerts bleibt, wobei die gespeicherte Referenz dann der Offenstellung als Referenzpunkt entspricht.

13. Verfahren nach Anspruch 11 oder 12, **dadurch gekennzeichnet, dass** der elektrische Kniehebelspanner (10) bis zum maximalen Totpunkt in die geöffnete Stellung gefahren wird und anschließend in die geschlossene Position gefahren wird, wobei erneut der Motorstrom erfasst wird, wenn der Motorstrom beim ersten Erfassen des Motorstroms einen ersten Referenzwert überschreitet.

14. Verfahren nach Anspruch 13, **dadurch gekennzeichnet, dass**, wenn der Motorstrom einen zweiten Referenzwert beim erneuten Erfassen des Motorstroms überschreitet, festgestellt wird, dass der elektrische Kniehebelspanner (10) sich in der geschlossenen Position befindet und ein Werkstück (22) vorhanden ist, und/oder dass, wenn der Motorstrom beim erneuten Erfassen des Motorstroms unterhalb des zweiten Referenzwertes liegt, festgestellt wird, dass der elektrische Kniehebelspanner (10) sich in der geschlossenen Position befindet und kein Werkstück (22) vorhanden ist.

15. Elektrischer Kniehebelspanner (10) mit einen Elektromotor (14) und eine Steuer- und Auswerteeinheit (26), wobei die Steuer- und Auswerteeinheit (26) eingerichtet ist, ein Verfahren nach einem der vorhergehenden Ansprüche auszuführen.

## Geänderte Patentansprüche

### Geänderte Patentansprüche gemäss Regel 137(2) EPÜ.

1. Verfahren zum Erfassen der aktuellen Phase des Spannverlaufs eines elektrischen Kniehebelspanners (10), wobei der elektrische Kniehebelspanner (10) einen Elektromotor (14) und eine Auswerteeinheit (30) umfasst, und wobei wenigstens die folgenden Schritte durchgeführt werden:
- Messen des Drehwinkels des Elektromotors (14) und des aktuellen Motorstroms des Elektromotors (14);
- Auswerten des Drehwinkels und des Motorstroms mittels der Auswerteeinheit (30), um ein Auswertungsergebnis zu erhalten; und
- Bestimmen der aktuellen Phase des Spannverlaufs des elektrischen Kniehebelspanners (10) basierend auf dem Auswertungsergebnis des Drehwinkels und des Motorstroms.

2. Verfahren nach Anspruch 1, **dadurch gekennzeichnet, dass** die aktuelle Position eines Spannarms (12) des Kniehebelspanners (10) basierend auf dem Auswerteergebnis bestimmt wird.

3. Verfahren nach Anspruch 1 oder 2, **dadurch gekennzeichnet, dass** der Motorstrom mit wenigstens einer in der Auswerteeinheit (30) gespeicherten Referenz verglichen wird, um ein Vergleichsergebnis zu erhalten, das dem Auswertungsergebnis entspricht.

4. Verfahren nach Anspruch 3, **dadurch gekennzeichnet, dass** die Referenz einen Referenzverlauf aufweist, der mehrere aufeinanderfolgende Referenzpunkte hat, insbesondere ein theoretisch ermittelter Referenzverlauf oder ein zuvor gemessener Referenzverlauf.

5. Verfahren nach Anspruch 3 oder 4, **dadurch gekennzeichnet, dass** die Referenz wenigstens einen Referenzpunkt aufweist, insbesondere wobei der wenigstens eine Referenzpunkt der geöffneten Position und/oder der geschlossenen Position entspricht.

6. Verfahren nach einem der vorhergehenden Ansprüche, **dadurch gekennzeichnet, dass** die Phasen des Spannverlaufs eine Schließfahrt, ein Spannen, ein Erreichen des Totpunkts, eine Verriegelung, ein Halten, ein Entriegeln und ein Entspannen umfassen.

7. Verfahren nach einem der vorhergehenden Ansprüche, **dadurch gekennzeichnet, dass** durch die Auswertung des Motorstroms auf Fehler und Verschleiß des elektrischen Kniehebelspanners (10) geschlossen wird.

8. Verfahren nach einem der vorhergehenden Ansprüche, **dadurch gekennzeichnet, dass** erkannt wird, ob ein Werkstück (22) vorhanden ist.

9. Verfahren nach einem der vorhergehenden Ansprüche, **dadurch gekennzeichnet, dass** basierend auf dem Motorstrom auf die aufgebrachte Spannkraft geschlossen wird.

10. Verfahren nach einem der vorhergehenden Ansprüche, **dadurch gekennzeichnet, dass** die Auswerteeinheit (30) einen Prozessor (34) umfasst, auf dem eine trainierte Künstliche Intelligenz ausgeführt wird, insbesondere ein Algorithmus für maschinelles Lernen, die bei der Auswertung verwendet wird.

11. Verfahren nach einem der vorhergehenden Ansprüche, **dadurch gekennzeichnet, dass** wenigstens eine Referenzfahrt durchgeführt wird, um eine Referenz zu bestimmen, wobei die Referenzfahrt wenigstens die folgenden Schritte umfasst:
- Bewegen des elektrischen Kniehebelspanners (10) in dessen Schließrichtung, indem der Elektromotor (14) um einen vorbestimmten Drehwinkel in Schließrichtung angetrieben wird;
- Erfassen des Motorstroms; und
- Speichern einer Referenz basierend auf dem erfassten Motorstrom.

12. Verfahren nach Anspruch 11, **dadurch gekennzeichnet, dass** die geöffnete Stellung angefahren wird, wenn beim Erfassen des Motorstroms festgestellt wird, dass der Motorstrom während der Referenzfahrt beim Verfahren in Schließrichtung unterhalb eines ersten Referenzwerts bleibt, wobei die gespeicherte Referenz dann der Offenstellung als Referenzpunkt entspricht.

13. Verfahren nach Anspruch 11 oder 12, **dadurch gekennzeichnet, dass** der elektrische Kniehebelspanner (10) bis zum maximalen Totpunkt in die geöffnete Stellung gefahren wird und anschließend in die geschlossene Position gefahren wird, wobei erneut der Motorstrom erfasst wird, wenn der Motorstrom beim ersten Erfassen des Motorstroms einen ersten Referenzwert überschreitet.

14. Verfahren nach Anspruch 13, **dadurch gekennzeichnet, dass**, wenn der Motorstrom einen zweiten Referenzwert beim erneuten Erfassen des Motorstroms überschreitet, festgestellt wird, dass der elektrische Kniehebelspanner (10) sich in der geschlossenen Position befindet und ein Werkstück (22) vorhanden ist, und/oder dass, wenn der Motorstrom beim erneuten Erfassen des Motorstroms unterhalb des zweiten Referenzwertes liegt, festgestellt wird, dass der elektrische Kniehebelspanner (10) sich in der geschlossenen Position befindet und kein Werkstück (22) vorhanden ist.

15. Elektrischer Kniehebelspanner (10) mit einen Elektromotor (14) und eine Steuer- und Auswerteeinheit (26), wobei die Steuer- und Auswerteeinheit (26) eingerichtet ist, ein Verfahren nach einem der vorhergehenden Ansprüche auszuführen.
